# EUROPÄISCHE PATENTSCHRIFT

(11) **EP 1 396 663 B1**
(45) Veröffentlichungstag und Bekanntmachung des Hinweises auf die Patenterteilung: **02.08.2006**
(21) Anmeldenummer: 03019554.9
(22) Anmeldetag: 02.09.2003
(51) Int. Cl.: F16H 57/04, F16N 11/08

(54) **Stützwinde mit Fettfüllung**
Support winch with grease
Treuil de support avec de graise

(30) Priorität: 04.09.2002 DE 10240824
(43) Veröffentlichungstag der Anmeldung: 10.03.2004
(73) Patentinhaber: Jost-Werke GmbH & Co. KG, 60528 Frankfurt am Main (DE)
(72) Erfinder: Algüera, José, 63739 Aschaffenburg (DE); Müller, Gerald, 63179 Obertshausen (DE)
(74) Vertreter: Fuchs Mehler Weiss & Fritzsche

(56) Entgegenhaltungen:
- DE-A1- 2 602 185
- GB-A- 699 778

## Beschreibung

Die Erfindung betrifft eine Anordnung von Schmierfett im Gehäuse eines Getriebes, welches drehbare Komponenten aufweist, insbesondere in dem Getriebe einer Stützwinde. Darüber hinaus bezieht sich die Erfindung auf einen Fettbeutel zur Aufnahme von Schmierfett und ferner auf ein Verfahren zum Schmieren von Getrieben mittels Schmierfett, entsprechend dem jeweiligen Oberbegriff der Ansprüche 1 und 20, und wie aus der DE 2 602 185 A bekannt ist.

Üblicherweise werden Getriebe vor ihrer Auslieferung mit Schmierfett abgeschmiert und somit dem Kunden in einsatzbereitem Zustand ausgeliefert. Da die Getriebe häufig nicht in ihrer Einbauposition, sondern beispielsweise liegend transportiert werden und das Schmierfett bereits nach kürzerer Lagerzeit des Getriebes Öl abscheidet, kann es vorkommen, dass dieses Öl aus Öffnungen des Getriebegehäuses austritt.

Eine derartige Problematik tritt z.b. bei Stützwinden auf, die paarweise an Aufliegern von Sattelzugespannen montiert werden sollen und im wesentlichen jeweils ein Stützrohr umfassen, in welchem ein über eine Antriebswelle und ein Getriebe teleskopierbares Innenrohr angeordnet ist.

Der große Nachteil des austretenden Öls liegt neben der Umweltverschmutzung darin, dass das Öl außen an dem Getriebegehäuse herunterläuft und vor nachfolgenden Lackierarbeiten aufwändig entfernt werden muss, da sonst kein befriedigendes Lackierergebnis erreicht werden kann.

Bei der Fertigung der Stützwinden wurde daher versucht, das Getriebegehäuse nach außen vollständig öldicht zu verschließen, was in der Praxis jedoch nur eingeschränkt zu befriedigenden Ergebnissen führte. Eine Abdichtung im Bereich eines das Stützrohr verschließenden Deckels war zwar durch Einbringen einer Dichtmasse zwischen Deckel und Stützrohr möglich, ebenso wie das Abdichten der Durchführung der Getriebeeingangswelle. Das Problem der Abdichtung der Verbindungswellenöffnung blieb bisher jedoch ungelöst.

Demzufolge lag der Erfindung die Aufgabe zugrunde, eine Anordnung von Schmierfett in dem Gehäuse eines Getriebes bereitzustellen, die einerseits eine einsatzbereite Schmierung des Getriebes im Auslieferungszustand ermöglicht und andererseits ein Auslaufen des vom Schmierfett abgeschiedenen Öls vor der ersten Inbetriebnahme wirksam verhindert.

Eine weitere Teilaufgabe bestand darin, einen optimierten Fettbeutel zur Aufnahme von Schmierfett zu entwickeln.

Eine weitere Teilaufgabe lag darin, ein Verfahren zum Schmieren eines Getriebes zu entwickeln, welches ein Einbringen des Schmierstoffs vor der Auslieferung ermöglicht und dabei einen Verlust von aus dem Schmierfett abgeschiedenem Öl verhindert.

Die Aufgabe wird erfindungsgemäß mit einer Anordnung gelöst, bei der vor der erstmaligen Inbetriebnahme des Getriebes das Schmierfett von mindestens einem Fettbeutel umschlossen ist, der mindestens eine Fettbeutel in das Gehäuse des Getriebes anliegend an mindestens eine drehbare Komponente eingebracht ist und der mindestens eine Fettbeutel bei der erstmaligen Inbetriebnahme durch Einwirkung der drehbaren Komponente aufreißt und das Schmierfett freigibt.

Durch die Drehbewegung der drehbaren Komponente, z. B. der Wellen und Zahnräder, wird das Schmierfett bei der ersten Benutzung gleichmäßig im Getriebe verteilt.

Um ein sicheres Aufreißen des Fettbeutels zu gewährleisten, kann mindestens ein Rand des Fettbeutels vorzugsweise auf einem Getriebezahnrad des Getriebes angeordnet sein. Sobald sich durch die Inbetriebnahme des Getriebes dieses Getriebezahnrad zu drehen beginnt, wird der gesamte Fettbeutel an dem Rand erfasst und in das Getriebe eingezogen. In dem Getriebe wird der Fettbeutel zunächst aufgerissen und das Fett durch die drehenden Getriebeteile verteilt.

Hierbei ist es von Vorteil, wenn der Fettbeutel unter Druck angeordnet ist, weil dadurch das Aufreißen des Fettbeutels erleichtert wird. Dies kann beispielsweise durch eine spezielle Ausbildung z. B. eines das Getriebe abdeckenden Deckels erfolgen, der mit auf den Fettbeutel drückenden Rippen versehen ist.

Eine besondere Ausführungsform betrifft die Anordnung von Schmierfett in dem Getriebe einer Stützwinde, wobei das Getriebe zumindest teilweise in einer aus einem Stützrohr und einem Getriebedeckel gebildeten Getriebekammer angeordnet ist, eine mit einem ersten Kegelrad ausgebildete Welle, insbesondere Zwischenwelle, aufweist, wobei das erste Kegelrad ein an dem getriebeseitigen Ende einer Spindel drehfest angeordnetes zweites Kegelrad kämmt, und durch ein Drehen der Welle- in einer ersten Drehrichtung ein in dem Stützrohr gelagertes und über eine Spindelmutter an der Spindel angreifendes Innenrohr in einer Ausfahrrichtung teleskopierbar ist, wobei das Schmierfett vollständig von einem Fettbeutel umschlossen und der Fettbeutel in die Getriebekammer mit mindestens einem Rand an dem ersten Kegelrad und/oder dem zweiten Kegelrad eingelegt ist. Bei der ersten Inbetriebnahme der Stützwinde beginnen sich die Kegelräder zu drehen, erfassen den Rand des Fettbeutels und ziehen den gesamten Fettbeutel zwischen das erste und zweite Kegelrad, so dass das Schmierfett bereits beim ersten Durchlauf des Fettbeutels durch die Kegelräder ausgedrückt und innerhalb des Getriebes verteilt wird.

Vorzugsweise ist der Fettbeutel in der ersten Drehrichtung auf einer einziehenden Seite der Kegelräder in der Getriebekammer angeordnet. Hierdurch wird erreicht, dass sich der Fettbeutel nicht selbständig zu positionieren braucht, sondern bereits vor der Auslieferung der Stützwinde in einer günstigen Position auf der einziehenden Seite der Kegelräder, unmittelbar vor den Kegelrädern eingebracht ist. Da die Stützwinden stets in eingefahrenem Zustand ausgeliefert werden und dadurch bedingt der Kunde die Stützwinde bei der ersten Inbetriebnahme ausschließlich in Ausfahrrichtung verfahren kann, ist der Drehsinn der Kegelräder bei der ersten Inbetriebnahme ebenfalls vorgegeben und dadurch die einziehende Seite der zusammenwirkenden Kegelräder definiert.

Günstigerweise weist der Fettbeutel eine Breite auf, die weitgehend dem Durchmesser des zweiten Kegelrades entspricht.

Der Durchmesser des zweiten Kegelrades wiederum entspricht vorzugsweise annähernd der Innenbreite der Getriebekammer. Durch die Breite des Beutels wird im wesentlichen die Form des Fettbeutels bei einer vorgegebenen Fettmenge bestimmt. Bei einer Breite des Fettbeutels, die deutlich größer als der Durchmesser des zweiten Kegelrades ist, nimmt die Wandreibung erheblich zu und der Fettbeutel wird mitunter nicht oder nur unvollständig eingezogen. Ein deutlich schmalerer Fettbeutel dagegen führt bei einer gleichen Länge des Fettbeutels und einer vorgegebenen Mindestmenge an Schmierfett zu einem prallgefüllten Fettbeutel, der häufig ebenfalls nicht oder nicht optimal von den Kegelrädern eingezogen und zerstört wird. Dies hat in beiden Fällen eine mangelnde Versorgung des Getriebes mit Schmierfett zur Folge.

Vorteilhafterweise ist der mindestens eine Rand des Fettbeutels mit einem Klebstoff an mindestens einem Kegelrad und/oder der Welle, insbesondere einer Zwischenwelle, befestigt. Hierdurch wird die Wahrscheinlichkeit eines Erfassens und Einziehens des Fettbeutels weiter erhöht. Als Klebstoff kommt beispielsweise ein Sprühkleber in Betracht.

Alternativ oder ergänzend zu einem Klebstoffeinsatz kann der Rand des Fettbeutels mit einer Montagezunge versehen sein, welche zwischen der Zwischenwelle und dem zweiten Kegelrad durchführbar ist.

Vorzugsweise weist der Getriebedeckel in den Innenraum vorstehende auf den Fettbeutel einwirkende Sperrrippen auf.

Bei den bekannten Stützwinden ist häufig der Getriebedeckel unterseitig mit einem vorstehenden umlaufenden Halterand und mit einer vorstehenden Kreuzrippe ausgebildet ist. Hier kann es sich günstig auswirken, an dem Halterand und der Kreuzrippe weitere Sperrrippen vorzusehen. Während die Kreuzrippe vornehmlich der Versteifung des Getriebedeckels dient, haben die Sperrrippen die Aufgabe, nach dem Einlegen des Fettbeutels diesen beim Schließen des Getriebedeckels gegen die Komponenten des Getriebes, wie beispielsweise die Kegelräder, zu drücken. Dadurch bedingt kann der Fettbeutel kleiner ausgeführt und mit einer geringeren Schmierfettmenge gefüllt sein. Daraus resultieren wiederum eine Kostenreduzierung und weniger vom Getriebe zu zerkleinerndes Fettbeutelmaterial.

Darüber hinaus verhindern die Sperrrippen ein Festsitzen des Fettbeutels oder größerer Mengen des Schmierfettes zwischen der Kreuzrippe und verbessern somit die Schmierung der beweglichen Getriebeteile.

Die weitere Teilaufgabe wird mit einem Fettbeutel gelöst, der aus einem Verbundmaterial gefertigt ist. Die einzelnen Schichten des Verbundmaterials haben dabei unterschiedliche Funktionen, wobei das Verbundmaterial vorzugsweise eine innenliegende Polyethylenschicht, eine darauf aufgebrachte Aluminiumschicht, eine Zwischenschicht aus Polyethylen und eine äußere Papierschicht umfasst. Die Polyethylenschichten sind notwendig, um das Beutelmaterial an den Randseiten miteinander zu verschweißen. Die Aluminiumschicht dient dazu, dass das Öl bzw. das Schmierfett nicht nach außen dringen kann und stellt somit eine Sperrschicht dar. Das Papier hat eine relativ raue Oberfläche, wird von den Getriebekomponenten relativ leicht erfasst und kann dann von diesen aufgerissen werden.

Günstigerweise weist die innenliegende Polyethylenschicht eine Masse pro Flächeneinheit von 20 g/m² bis 30 g/m², die Aluminiumschicht eine Dicke von 5 µm bis 10 µm, die Zwischenschicht aus Polyethylen eine Masse pro Flächeneinheit von 10 g/m² bis 15 g/m² und die äußere Papierschicht eine Masse pro Flächeneinheit von 20 g/m² bis 50 g/m² auf. Ein derartiger Schichtaufbau des Verbundmaterials sorgt einerseits für eine dichte Kapselung des Schmierfetts und beeinträchtigt andererseits nach der Abgabe des Schmierfetts kaum das Laufverhalten des Getriebes. Dieses macht sich beispielsweise in einem für den Bediener der Stützwinde nicht spürbar veränderten Kraftaufwand für das Verfahren der Stützwinde bemerkbar.

Die äußere Form des Fettbeutels kann eine Rechteckform mit zwei gegenüberliegenden Längsrändern und zwei gegenüberliegenden Kopfrändem umfassen. Bei der Ausbildung des Fettbeutels in Rechteckform kann ein erster Längsrand als Faltrand und der gegenüberliegende zweite Längsrand sowie die Kopfränder als Schweißrand gefertigt sein. Hierdurch wird fertigungstechnisch ein sehr einfacher Weg beschritten, da trotz der Rechteckform nur drei Seiten verschweißt werden zu brauchen. Darüber hinaus sind die Fertigungstoleranzen und der Ausschuss geringer, da der Fettbeutel aus einem einstückigen Material gefertigt ist und es während der Fertigung des Fettbeutels weniger zu Verschiebungen der Oberseite zur Unterseite kommt.

Vorteilhafterweise nimmt die Breite des Schweißrandes mindestens um einen Kopfrand in Richtung der Längsränder zu. Hierdurch wird ebenfalls der Einzug des Fettbeutels in das Getriebe erleichtert, da häufig das erste Kegelrad in einem Randbereich des Getriebekastens angeordnet ist und der mit dem ersten Kegelrad zusammenwirkende Schweißrand bei der o.g. Ausführungsform des Fettbeutels in diesem Randbereich breiter ausgebildet ist. Um Fehler beim Einlegen des Fettbeutels vor der Auslieferung des Getriebes zu verringern, sollte die Breite des Schweißrandes symmetrisch in Richtung der Längsränder zu nehmen.

Als besonders günstig hat es sich erwiesen, den Fettbeutel zur Aufnahme einer Schmierfettmenge von 160 g bis 200 g auszubilden. Mit Hilfe einer derartigen Schmierfettmenge ist eine Schmierung des Stützwindengetriebes sichergestellt und dabei gleichzeitig die aufzuwendende Menge an Schmierfett gegenüber dem Stand der Technik deutlich verringert. Dieses liegt daran, dass das Schmierfett unmittelbar auf die beweglichen Komponenten des Getriebes abgegeben wird und dadurch bedingt das Auffüllen von Hohlräumen innerhalb der Getriebekammer vermieden wird.

Die weitere Teilaufgabe wird mit einem Verfahren gelöst, bei dem vor der Inbetriebnahme mindestens ein Fettbeutel mit Schmierfett mit dem Getriebe kontaktiert wird, bei dem bei der Inbetriebnahme des Getriebes mindestens eine Komponente des Getriebes den mindestens einen Fettbeutel aufreißt, so dass das Schmierfett freigegeben wird und das Getriebe schmiert, und bei dem der mindestens eine Fettbeutel nach der Inbetriebnahme im Getriebe verbleibt. Der große Vorteil dieses Verfahrens liegt darin, dass an den Getrieben bzw. dem das Getriebe umgebende Stützrohr keine baulichen Veränderungen vorgenommen werden müssen.

Vorzugsweise löst sich der mindestens eine Fettbeutel selbst auf. Als Fettbeutel könnten hier eine oder mehrere Gelatine-Kapsel(n) dienen.

Vorteilhafterweise wird der Fettbeutel jedoch durch das Getriebe zermahlen, so dass nach mehrfachem Verfahren der Stützwinde der Fettbeutel zerkleinert ist und sich die in dem Getriebe verbleibenden zermahlenen Teile des Fettbeutels nicht störend auswirken.

Anhand der nachfolgenden sechs Zeichnungsfiguren wird die Erfindung beispielhaft erläutert. Es zeigen die:
- Figur 1: einen Längsschnitt durch einen oberen Abschnitt einer Stützwinde mit Schmierfettfüllung;
- Figur 2: eine Ansicht gemäß Figur 1 mit eingelegtem Fettbeutel vor der ersten Inbetriebnahme;
- Figur 3: eine Draufsicht auf eine geöffnete Stützwinde mit eingelegtem Fettbeutel vor der ersten Inbetriebnahme;
- Figur 4: eine Draufsicht auf einen Fettbeutel;
- Figur 5: eine Unteransicht auf einen Getriebedeckel und
- Figur 6: einen Längsschnitt entlang der Schnittlinie A - A in Figur 5.

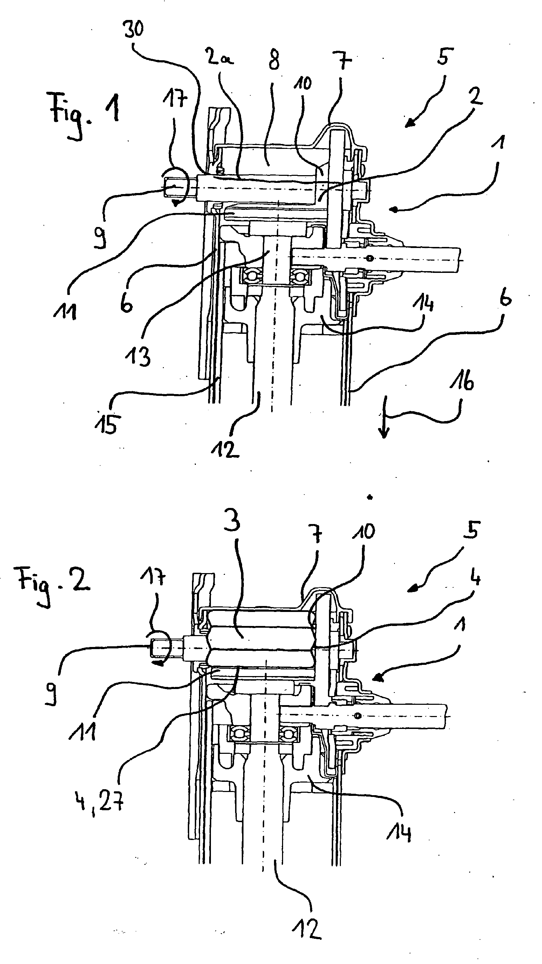

In der Figur 1 ist ein Längsschnitt durch einen oberen Abschnitt einer Stützwinde 5 mit konventioneller Schmierfettfüllung dargestellt.

Dabei ist das Getriebe 1 innerhalb des Stützrohres 6 angeordnet und treibt eine Spindel 12 an, die bei Rotation eine ortsfest mit dem Innenrohr 15 verbundene Spindelmutter 14 in Ausfahrrichtung 16 verfährt. An dem getriebeseitigen Ende 13 der Spindel 12 ist die Spindel 12 drehfest mit dem zweiten Kegelrad 11 verbunden, welches wiederum mit dem an der Zwischenwelle 9 drehfest angeordneten ersten Kegelrad 10 zusammenwirkt. Bei Drehen der Zwischenwelle 9 in einer ersten Drehrichtung 17 bewegt sich das Innenrohr 15 in Ausfahrrichtung 16.

Zur Sicherstellung einer Schmierung des Getriebes 1 wurde die nach unten offene und aus Stützrohr 6 und Getriebedeckel 7 gebildete Getriebekammer 8 mit Schmierfett 2 bis zur Füllhöhe 2a aufgefüllt. Nach einem Abscheiden von Öl (nicht eingezeichnet) aus dem Schmierfett 2 entweicht dieses häufig über die bisher nicht befriedigend abdichtbare Wellendurchführung 30 der Zwischenwelle 9.

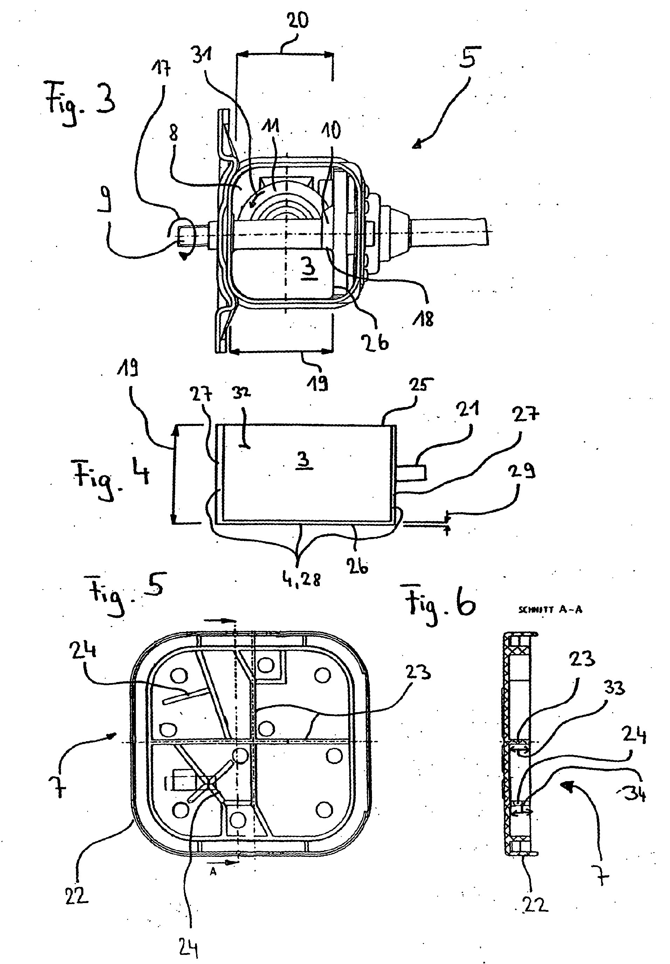

Die Figur 2 zeigt eine Ansicht gemäß der Figur 1 mit eingelegtem Fettbeutel 3 vor der ersten Inbetriebnahme. Hierbei liegt der Fettbeutel 3 mit mindestens einem Rand 4, insbesondere dem Kopfrand 27, vollflächig auf dem zweiten Kegelrad 11 auf und steht gleichzeitig mit dem ersten Kegelrad 10 in Kontakt, wie der Figur 3 zu entnehmen ist.

In der Figur 3 ist die Stützwinde 5 in einer Draufsicht ohne den Getriebedeckel 7 ebenfalls mit eingelegtem Fettbeutel 3 vor der ersten Inbetriebnahme dargestellt. Dabei wurde der Fettbeutel 3 auf der einziehenden Seite 18 der Kegelräder 10, 11 eingelegt, die bei einer Ausfahrrichtung 16 (s. Fig. 1) durch die damit korrespondierende erste Drehrichtung 17 der Zwischenwelle 9 definiert ist.

In der Draufsicht der Figur 3 ist ebenfalls zu erkennen, dass die Breite 19 des Fettbeutels 3 ungefähr dem Durchmesser 20 des zweiten Kegelrades 11 entspricht und der zweite Längsrand 26 bereits vor der ersten Inbetriebnahme an dem ersten Kegelrad 10 anliegt.

Bei einer Rotation der Zwischenwelle 9 in erster Drehrichtung 17 wird der Kopfrand 27 (vergleiche Figur 4) von der Zwischenwelle 9 und dem zweiten Kegelrad 11 bzw. in einer ersten Phase von dem ersten Kegelrad 10 erfasst und eingezogen.

In einer späteren Phase greift das erste Kegelrad 10 vornehmlich an den zweiten Längsrand 26 des Fettbeutels 3 an, während das in einer Drehrichtung 31 drehende zweite Kegelrad 11 den bereits teilweise geöffneten und teilweise ausgedrückten Fettbeutel 3 auf der einziehenden Seite 18 in Richtung des ersten Kegelrades 10 befördert.

In einer Endphase wird der Fettbeutel 3 vollständig zwischen dem ersten und zweiten Kegelrad 10, 11 hindurchgezogen und in weiteren Umläufen weitgehend zerstört.

Die Figur 4 zeigt eine Draufsicht auf den Fettbeutel 3, der einen ersten als Faltrand ausgebildeten Längsrand 25 aufweist sowie einen gegenüberliegenden als Schweißrand 28 gefertigten zweiten Längsrand 26. Die beiden Kopfränder 27 sind ebenfalls als Schweißrand 28 gefertigt, wobei an einem Kopfrand 27 eine Montagezunge 21 befestigt ist. Die Montagezunge 21 kann bereits bei der Montage zwischen die Zwischenwelle 9 und das zweite Kegelrad 11 gesteckt und vorzugsweise mittels eines Sprühklebers an der Zwischenwelle 9 angeklebt werden.

An den Schweißrändern 28 sind entsprechend der Breite 29 die Oberseite 32 und die Unterseite (nicht erkennbar) des Fettbeutels 3 stoffschlüssig miteinander verbunden. Aufgrund der flachen Ausbildung des Schweißrandes 28 greifen an diesem die Verzahnungen der Kegelräder 10, 11 besonders effektiv an.

Die Figur 5 zeigt in einer Unteransicht den Getriebedeckel 7 mit Halterand 22 und der zur Erhöhung der Festigkeit dienenden Kreuzrippe 23. Um ein Festsitzen, des Fettbeutels 3 auf der Unterseite des Getriebedeckels 7 zwischen der Kreuzrippe 23 und dem Halterand 22 zu verhindern, sind zusätzliche Sperrrippen 24 ausgeformt.

Die Höhe 34 der Sperrrippen 24 entspricht dabei der Höhe 33 der Kreuzrippe 23, wie dem Längsschnitt entlang der Schnittlinie A - A des Getriebedeckels 7 in Figur 6 entnommen werden kann.

### Bezugszeichenliste

- 1: Getriebe
- 2: Schmierfett
- 2a: Füllhöhe Schmierfett
- 3: Fettbeutel
- 4: Rand
- 5: Stützwinde
- 6: Stützrohr
- 7: Getriebedeckel
- 8: Getriebekammer
- 9: Zwischenwelle
- 10: erstes Kegelrad
- 11: zweites Kegelrad
- 12: Spindel
- 13: Getriebeseitiges Ende der Spindel
- 14: Spindelmutter
- 15: Innenrohr
- 16: Ausfahrrichtung
- 17: erste Drehrichtung
- 18: einziehende Seite der Kegelräder
- 19: Breite Fettbeutel
- 20: Durchmesser zweites Kegelrad
- 21: Montagezunge
- 22: Halterand Getriebedeckel
- 23: Kreuzrippe
- 24: Sperrrippen
- 25: erster Längsrand
- 26: zweiter Längsrand
- 27: Kopfrand
- 28: Schweißrand
- 29: Breite Schweißrand
- 30: Wellendurchführung Zwischenwelle
- 31: Drehrichtung zweites Kegelrad
- 32: Oberseite Fettbeutel
- 33: Höhe Kreuzrippe
- 34: Höhe Sperrrippe

## Patentansprüche

1. Anordnung von Schmierfett (2) im Gehäuse eines Getriebes (1), wobei das Getriebe drehbare Komponenten aufweist, **dadurch gekennzeichnet,**
**dass** vor der erstmaligen Inbetriebnahme des Getriebes (1) das Schmierfett (2) von mindestens einem Fettbeutel (3) umschlossen ist, der mindestens eine Fettbeutel (3) in das Gehäuse des Getriebes (1) anliegend an mindestens eine drehbare Komponente eingebracht ist und der mindestens eine Fettbeutel (3) bei der erstmaligen Inbetriebnahme durch Einwirkung der drehbaren Komponente aufreißt und das Schmierfett (2) freigibt.

2. Anordnung nach Anspruch 1, **dadurch gekennzeichnet, dass** mindestens ein Rand (4) des Fettbeutels (3) auf einem Getriebezahnrad des Getriebes (1) angeordnet ist.

3. Anordnung von Schmierfett nach Anspruch 1 oder 2 in dem Getriebe einer Stützwinde (5), wobei das Getriebe (1) zumindest teilweise in einer aus einem Stützrohr (6) und einem Getriebedeckel (7) gebildeten Getriebekammer (8) angeordnet ist, eine mit einem ersten Kegelrad (10) ausgebildete Welle (9) aufweist, wobei das erste Kegelrad (10) ein an dem getriebeseitigen Ende (13) einer Spindel (12) drehfest angeordnetes zweites Kegelrad (11) kämmt, und durch ein Drehen der Welle (9) in einer ersten Drehrichtung (17) ein in dem Stützrohr (6) gelagertes und über eine Spindelmutter (14) an der Spindel (12) angreifendes Innenrohr (15) in einer Ausfahrrichtung (16) teleskopierbar ist,
**dadurch gekennzeichnet, dass** der Fettbeutel (3) in die Getriebekammer (8) mit mindestens einem Rand (4) an dem ersten Kegelrad (10) und/oder dem zweiten Kegelrad (11) eingelegt ist.

4. Anordnung nach Anspruch 3, **dadurch gekennzeichnet, dass** der Fettbeutel (3) in der ersten Drehrichtung (17) auf einer einziehenden Seite (18) der Kegelräder (10,11) in der Getriebekammer (8) angeordnet ist.

5. Anordnung nach Anspruch 3 oder 4, **dadurch gekennzeichnet, dass** der Fettbeutel (3) eine Breite (19) aufweist, die weitgehend dem Durchmesser (20) des zweiten Kegelrades (11) entspricht.

6. Anordnung nach einem der Ansprüche 3 bis 5, **dadurch gekennzeichnet, dass** der mindestens eine Rand (4) des Fettbeutels (3) mit einem Klebstoff an mindestens einem Kegelrad (10,11) und/oder der Zwischenwelle (9) befestigt ist.

7. Anordnung nach einem der Ansprüche 3 bis 6, **dadurch gekennzeichnet, dass** der Rand (4) des Fettbeutels (3) eine Montagezunge (21) aufweist, welche zwischen der Zwischenwelle (9) und dem zweiten Kegelrad (11) durchführbar ist.

8. Anordnung nach einem der Ansprüche 3 bis 7, bei der der Getriebedeckel (7) unterseitig mit einem vorstehenden umlaufenen Halterand (22) und mit einer vorstehenden Kreuzrippe (23) ausgebildet ist, **dadurch gekennzeichnet, dass** an dem Halterand (22) und der Kreuzrippe (23) weitere Sperrrippen (24) angreifen.

9. Anordnung nach einem der Ansprüche 3 bis 8, **dadurch gekennzeichnet, dass** der Fettbeutel (3) die Merkmale der Ansprüche 10 bis 19 aufweist.

10. Fettbeutel (3) zur Aufnahme von Schmierfett (2), insbesondere zum Einlegen in ein Getriebe (1), **dadurch gekennzeichnet, dass** der Fettbeutel (3) aus einem Verbundmaterial gefertigt ist.

11. Fettbeutel (3) nach Anspruch 10, **dadurch gekennzeichnet, dass** das Verbundmaterial eine innenliegende Polyethylenschicht, eine darauf aufgebrachte Aluminiumschicht, eine Zwischenschicht aus Polyethylen und eine äußere Papierschicht umfasst.

12. Fettbeutel (3) nach Anspruch 11, **dadurch gekennzeichnet, dass** die innenliegende Polyethylenschicht eine Masse pro Flächeneinheit von 20 g/m² bis 30 g/m² aufweist.

13. Fettbeutel (3) nach Anspruch 11 oder 12, **dadurch gekennzeichnet, dass** die Aluminiumschicht eine Dicke von 5 µm bis 10 µm aufweist.

14. Fettbeutel (3) nach einem der Ansprüche 11 bis 13, **dadurch gekennzeichnet, dass** die Zwischenschicht aus Polyethylen eine Masse pro Flächeneinheit von 10 g/m² bis 15 g/m² aufweist.

15. Fettbeutel (3) nach einem der Ansprüche 11 bis 14, **dadurch gekennzeichnet, dass** die äußere Papierschicht eine Masse pro Flächeneinheit von 20 g/m² bis 50 g/m² aufweist.

16. Fettbeutel (3) nach einem der Ansprüche 10 bis 15, **dadurch gekennzeichnet, dass** der Fettbeutel (3) eine Rechteckform mit zwei gegenüberliegenden Längsrändern (25,26) und zwei gegenüberliegenden Kopfrändern (27) aufweist.

17. Fettbeutel nach Anspruch 16, **dadurch gekennzeichnet, dass** ein erster Längsrand (25) als Faltrand und der gegenüberliegende zweite Längsrand (26) sowie die Kopfränder (27) als Schweißrand (28) ausgebildet sind.

18. Fettbeutel nach Anspruch 17, **dadurch gekennzeichnet, dass** die Breite (29) des Schweißrandes (28) mindestens eines Kopfrandes (27) in Richtung der Längsränder (25,26) zunimmt.

19. Fettbeutel nach einem der Ansprüche 10 bis 18, **dadurch gekennzeichnet, dass** der Fettbeutel (3) zur Aufnahme einer Schmierfettmenge von 160 g bis 200 g ausgebildet ist.

20. Verfahren zum Schmieren von Getrieben (1) mittels Schmierfett (2), **dadurch gekennzeichnet, dass** vor der Inbetriebnahme mindestens ein Fettbeutel (3) mit Schmierfett (2) mit dem Getriebe (1) kontaktiert wird, dass bei der Inbetriebnahme des Getriebes (1) mindestens eine Komponente des Getriebes (1) den mindestens einen Fettbeutel (3) aufreißt, so dass das Schmierfett (2) freigegeben wird und das Getriebe (1) schmiert, und dass der mindestens eine Fettbeutel (3) nach der Inbetriebnahme im Getriebe (1) verbleibt.

21. Verfahren nach Anspruch 20, **dadurch gekennzeichnet, dass** der Fettbeutel (3) sich selbst auflöst.

22. Verfahren nach Anspruch 20 oder 21, **dadurch gekennzeichnet, dass** der Fettbeutel (3) durch das Getriebe (1) zermahlen wird.

## Claims

1. Lubricating grease arrangement (2) in the housing of a gearbox (1), the gearbox having rotary components, **characterized in that**, before the gearbox (1) is used for the first time, the lubricating grease (2) is enclosed by at least one grease bag (3), the at least one grease bag (3) is introduced into the housing of the gearbox (1) adjacent to at least one rotary component, and the at least one grease bag (3), when the gearbox is used for the first time, rips open through the effect of the rotary component and releases the lubricating grease (2).

2. Arrangement according to Claim 1, **characterized in that** at least one rim (4) of the grease bag (3) is disposed on a gearwheel of the gearbox (1).

3. Lubricating grease arrangement according to Claim 1 or 2 in the gearbox of a landing gear (5), wherein the gearbox (1) is disposed at least partially in a gearbox chamber (8) formed from a support pipe (6) and a gearbox cover (7), has a shaft (9) configured with a first bevel gear (10), the first bevel gear (10) meshing with a second bevel gear (11) disposed in a rotationally secure manner on the gearbox-side end (13) of a spindle (12), and wherein a rotation of the shaft (9) in a first rotational direction (17) allows an inner pipe (15), mounted in the support pipe (6) and acting upon the spindle (12) via a spindle nut (14), to be telescoped in a direction of extension (16), **characterized in that** the grease bag (3) is inserted in the gearbox chamber (8) with at least one rim (4) against the first bevel gear (10) and/or the second bevel gear (11).

4. Arrangement according to Claim 3, **characterized in that** the grease bag (3) is disposed, in the first rotational direction (17), on a draw-in side (18) of the bevel gears (10, 11) in the gearbox chamber (8).

5. Arrangement according to Claim 3 or 4, **characterized in that** the grease bag (3) has a width (19) which broadly corresponds to the diameter (20) of the second bevel gear (11).

6. Arrangement according to one of Claims 3 to 5, **characterized in that** the at least one rim (4) of the grease bag (3) is fastened with an adhesive to at least one bevel gear (10, 11) and/or to the intermediate shaft (9).

7. Arrangement according to one of Claims 3 to 6, **characterized in that** the rim (4) of the grease bag (3) has an assembly tongue (21), which can be guided through between the intermediate shaft (9) and the second bevel gear (11).

8. Arrangement according to one of Claims 3 to 7, in which the gearbox cover (7) is configured on the bottom side with a protruding circumferential holding rim (22) and with a protruding cross rib (23), **characterized in that** the holding rim (22) and the cross rib (23) are acted upon by further locking ribs (24).

9. Arrangement according to one of Claims 3 to 8, **characterized in that** the grease bag (3) has the features of Claims 10 to 19.

10. Grease bag (3) for receiving lubricating grease (2), especially for insertion in a gearbox (1), **characterized in that** the grease bag (3) is produced from a composite material.

11. Grease bag (3) according to Claim 10, **characterized in that** the composite material comprises an innermost polyethylene layer, an aluminium layer applied thereto, an intermediate layer of polyethylene, and an outer paper layer.

12. Grease bag (3) according to Claim 11, **characterized in that** the innermost polyethylene layer has a mass per unit of area of 20 g/m² to 30 g/m².

13. Grease bag (3) according to Claim 11 or 12, **characterized in that** the aluminium layer has a thickness of 5 µm to 10 µm.

14. Grease bag (3) according to one of Claims 11 to 13, **characterized in that** the intermediate layer of polyethylene has a mass per unit of area of 10 g/m² to 15 g/m².

15. Grease bag (3) according to one of Claims 11 to 14, **characterized in that** the outer paper layer has a mass per unit of area of 20 g/m² to 50 g/m².

16. Grease bag (3) according to one of Claims 10 to 15, **characterized in that** the grease bag (3) has a rectangular shape with two opposite longitudinal rims (25, 26) and two opposite end rims (27).

17. Grease bag according to Claim 16, **characterized in that** a first longitudinal rim (25) is configured as a folding rim and the opposite second longitudinal rim (26) and also the end rims (27) are configured as a weld rim (28).

18. Grease bag according to Claim 17, **characterized in that** the width (29) of the weld rim (28) of at least one end rim (27) increases in the direction of the longitudinal rims (25, 26).

19. Grease bag according to one of Claims 10 to 18, **characterized in that** the grease bag (3) is configured to receive a lubricating grease quantity of 160 g to 200 g.

20. Method for lubricating gearboxes (1) by means of lubricating grease (2), **characterized in that**, before the gearbox is first used, at least one grease bag (3) containing lubricating grease (2) is placed in contact with the gearbox (1), **in that**, when the gearbox (1) is first used, at least one component of the gearbox (1) rips open the at least one grease bag (3), so that the lubricating grease (2) is released and lubricates the gearbox (1), and **in that** the at least one grease bag (3) remains in the gearbox (1) after this is first used.

21. Method according to Claim 20, **characterized in that** the grease bag (3) dissolves by itself.

22. Method according to Claim 20 or 21, **characterized in that** the grease bag (3) is crushed by the gearbox (1).

## Revendications

1. Disposition de graisse de lubrification (2) dans le carter d'un mécanisme de transmission (1), le mécanisme de transmission présentant des éléments rotatifs, **caractérisée en ce qu'**avant la première mise en service du mécanisme de transmission (1), la graisse de lubrification (2) est enfermée dans au moins un sac de graisse (3), le sac de graisse (3) au moins unique est introduit dans le carter du mécanisme de transmission (1) en application contre au moins un élément rotatif, et le sac de graisse (3) au moins unique, lors de la première mise en service, est ouvert par déchirement par l'action de l'élément rotatif et libère la graisse de lubrification (2).

2. Disposition selon la revendication 1, **caractérisée en ce qu'**au moins un bord (4) du sac de graisse (3) est disposé sur une roue dentée du mécanisme de transmission (1).

3. Disposition de graisse de lubrification selon la revendication 1 ou 2 dans le mécanisme de transmission d'un vérin de support (5), sachant que le mécanisme de transmission (1) est disposé au moins partiellement dans une chambre de transmission (8) formée par un tube de support (6) et par un couvercle de transmission (7) et présente un arbre (9) doté d'une première roue conique (10), sachant que la première roue conique (10) engrène avec une deuxième roue conique (11) disposée en solidarité de rotation à l'extrémité côté transmission (13) d'une broche (12), et sachant que, par une rotation de l'arbre (9) dans une première direction de rotation (17), un tube intérieur (15) monté dans le tube de support (6) et engageant la broche (12) via un écrou de broche (14) peut être déplacé télescopiquement dans une direction de déploiement (16), **caractérisée en ce que** le sac de graisse (3) est inséré dans la chambre de transmission (8) avec au moins un bord (4) appliqué contre la première roue conique (10) et/ou la deuxième roue conique (11).

4. Disposition selon la revendication 3, **caractérisée en ce que** le sac de graisse (3) est disposé dans la chambre de transmission (8) sur un côté entrant (18), dans la première direction de rotation (17), des roues coniques (10, 11).

5. Disposition selon la revendication 3 ou 4, **caractérisée en ce que** le sac de graisse (3) présente une largeur (19) qui correspond essentiellement au diamètre (20) de la deuxième roue conique (11).

6. Disposition selon l'une quelconque des revendications 3 à 5, **caractérisée en ce que** le bord au moins unique (4) du sac de graisse (3) est fixé par un produit adhésif sur au moins une roue conique (10, 11) et/ou sur l'arbre intermédiaire (9).

7. Disposition selon l'une quelconque des revendications 3 à 6, **caractérisée en ce que** le bord (4) du sac de graisse (3) présente une languette de montage (21) qui peut être passée entre l'arbre intermédiaire (9) et la deuxième roue conique (11).

8. Disposition selon l'une quelconque des revendications 3 à 7, dans laquelle le couvercle de transmission (7) est doté sur le dessous d'un bord de retenue entourant (22) en saillie et d'une nervure transversale (23) en saillie, **caractérisée en ce que** d'autres nervures de blocage (24) agissent sur le bord de retenue (22) et sur la nervure transversale (23).

9. Disposition selon l'une quelconque des revendications 3 à 8, **caractérisée en ce que** le sac de graisse (3) présente les caractéristiques des revendications 10 à 19.

10. Sac de graisse (3) pour recevoir de la graisse de lubrification (2), destiné en particulier à être inséré dans un mécanisme de transmission (1), **caractérisé en ce que** le sac de graisse (3) est fabriqué en un matériau composite.

11. Sac de graisse (3) selon la revendication 10, **caractérisé en ce que** le matériau composite comprend une couche intérieure de polyéthylène, une couche d'aluminium apposée sur la précédente, une couche intermédiaire de polyéthylène et une couche extérieure de papier.

12. Sac de graisse (3) selon la revendication 11, **caractérisé en ce que** la couche intérieure de polyéthylène présente un poids par unité de surface de 20 g/m² à 30 g/m².

13. Sac de graisse (3) selon la revendication 11 ou 12, **caractérisé en ce que** la couche d'aluminium présente une épaisseur de 5 µm à 10 µm.

14. Sac de graisse (3) selon l'une quelconque des revendications 11 à 13, **caractérisé en ce que** la couche intermédiaire de polyéthylène présente un poids par unité de surface de 10 g/m² à 15 g/m².

15. Sac de graisse (3) selon l'une quelconque des revendications 11 à 14, **caractérisé en ce que** la couche extérieure de papier présente un poids par unité de surface de 20 g/m² à 50 g/m².

16. Sac de graisse (3) selon l'une quelconque des revendications 10 à 15, **caractérisé en ce que** le sac de graisse (3) présente une forme rectangulaire avec deux bords longitudinaux opposés (25, 26) et deux bords frontaux opposés (27).

17. Sac de graisse selon la revendication 16, **caractérisé en ce qu'**un premier bord longitudinal (25) est conçu comme bord de pliage, et le deuxième bord longitudinal, opposé (26) ainsi que les bords frontaux (27) sont conçus comme bords de soudage (28).

18. Sac de graisse selon la revendication 17, **caractérisé en ce que** la largeur (29) du bord de soudage (28) d'au moins un bord frontal (27) augmente en direction des bords longitudinaux (25, 26).

19. Sac de graisse selon l'une quelconque des revendications 10 à 18, **caractérisé en ce que** le sac de graisse (3) est conçu pour recevoir une quantité de graisse de lubrification de 160 g à 200 g.

20. Procédé pour lubrifier des mécanismes de transmission (1) au moyen de graisse de lubrification (2), **caractérisé en ce qu'**avant la mise en service, au moins un sac de graisse (3) rempli de graisse de lubrification (2) est mis en contact avec le mécanisme de transmission (1), **en ce que**, lors de la mise en service du mécanisme de transmission (1), au moins un élément du mécanisme de transmission (1) ouvre le sac de graisse (3) au moins unique en le déchirant, de sorte que la graisse de lubrification (2) est libérée et lubrifie le mécanisme de transmission (1), et **en ce que** le sac de graisse (3) au moins unique demeure dans le mécanisme de transmission (1) après la mise en service.

21. Procédé selon la revendication 20, **caractérisé en ce que** le sac de graisse (3) se dissout de lui-même.

22. Procédé selon la revendication 20 ou 21, **caractérisé en ce que** le sac de graisse (3) est réduit en poudre par le mécanisme de transmission (1).
